# EUROPEAN PATENT SPECIFICATION

(11) **EP 4 538 981 B1**
(45) Date of publication and mention of the grant of the patent: **21.10.2026**
(21) Application number: 23819198.5
(22) Date of filing: 08.06.2023
(51) Int. Cl.: G06T 11/00, G06T 7/00

(54) **IMAGE RECONSTRUCTION AND ANALYSIS METHOD, SYSTEM, AND DEVICE BASED ON SALINE RADIOGRAPHY ELECTRICAL IMPEDANCE LUNG PERFUSION AND CARDIAC IMAGING**
BILDREKONSTRUKTIONS- UND ANALYSEVERFAHREN, SYSTEM UND VORRICHTUNG AUF BASIS VON SALZRADIOGRAPHIE-LUNGENPERFUSION MIT ELEKTRISCHER IMPEDANZ UND HERZBILDGEBUNG
PROCÉDÉ, SYSTÈME ET DISPOSITIF DE RECONSTRUCTION ET D'ANALYSE D'IMAGE BASÉS SUR UNE PERFUSION PULMONAIRE À IMPÉDANCE ÉLECTRIQUE DE RADIOGRAPHIE SALINE ET UNE IMAGERIE CARDIAQUE

(30) Priority: 10.06.2022 CN 202210649286; 10.06.2022 CN 202210649287; 10.06.2022 CN 202210654812; 02.12.2022 CN 202211532638; 02.12.2022 CN 202211532639
(43) Date of publication of application: 16.04.2025
(73) Proprietor: Peking Union Medical College Hospital, Beijing 100730 (CN)
(72) Inventor: HE, Huaiwu, Beijing 100730 (CN); MI, Liangyu, Beijing 100730 (CN); YUAN, Siyi, Beijing 100730 (CN); XU, Mengru, Beijing 100730 (CN); LONG, Yun, Beijing 100730 (CN); WANG, Qianlin, Beijing 100730 (CN); YANG, Yingying, Beijing 100730 (CN); ZHAO, Zhanqi, Guangzhou, Guangdong 510220 (CN)
(74) Representative: LEITZINGER OY
(86) International application number: PCT/CN2023/099037
(87) International publication number: WO 2023/237034

(56) References cited:
- CN-A- 104 582 566
- CN-A- 108 550 388
- CN-A- 111 275 786
- CN-A- 111 449 657
- CN-A- 114 723 844
- CN-A- 114 723 845
- CN-A- 115 035 208
- CN-A- 115 530 791
- CN-A- 115 530 792
- US-B1- 11 278 261
- REN GE ET AL: "Deep Learning-Based Computed Tomography Perfusion Mapping (DL-CTPM) for Pulmonary CT-to-Perfusion Translation", INTERNATIONAL JOURNAL OF RADIATION: ONCOLOGY BIOLOGY PHYSICS, PERGAMON PRESS, USA, vol. 110, no. 5, 6 March 2021 (2021-03-06), pages 1508 - 1518, XP086697507, ISSN: 0360-3016, [retrieved on 20210306], DOI: 10.1016/J.IJROBP.2021.02.032
- XU MENGRU ET AL: "Lung Perfusion Assessment by Bedside Electrical Impedance Tomography in Critically Ill Patients", FRONTIERS IN PHYSIOLOGY, vol. 12, 13 October 2021 (2021-10-13), CH, XP093280181, ISSN: 1664-042X, DOI: 10.3389/fphys.2021.748724

## Description

### TECHNICAL FIELD

The present application relates to the field of image analysis in clinical medicine, and specifically, relates to an image reconstruction and analysis method for saline contrast electrical impedance tomography (EIT)-based lung perfusion imaging and cardiac imaging, a system, an apparatus, and a computer-readable storage medium, and use thereof.

### BACKGROUND

Electrical impedance tomography (EIT) is a bedside, non-invasive, continuous, dynamic, and radiation-free advanced technology for monitoring lung ventilation. EIT is mainly as follows: a weak current is applied through a local electrode to induce the change in bioelectrical impedance of the thoracic cavity during ventilation, and then the corresponding imaging algorithm is used to monitor a functional status of lung ventilation. The common high-conductivity contrast agent-enhanced imaging is the saline contrast-enhanced imaging. The saline contrast-enhanced imaging is mainly as follows: a high-conductivity contrast agent is injected from the central venous catheter in a bolus injection manner, an electrical impedance dilution curve of the thoracic electrical impedance over time is acquired during a process the contrast agent first passes through the right atrium, the right ventricle, and the pulmonary blood vessels, and the corresponding analysis is conducted to obtain the lung perfusion distribution. The team of inventors of the present application has carried out a series of research and development for the clinical applications related to saline-contrast EIT-based lung perfusion imaging.

An existing technical solution REN GE ET AL: "Deep Learning-Based Computed Tomography Perfusion Mapping (DLCTPM) for Pulmonary CT-to-Perfusion Translation", presents a retrospective analysis of the pulmonary technetium-99m-labeled macroaggregated albumin single-photon emission CT (SPECT)/CT scans obtained from 73 patients at Queen Mary Hospital in Hong Kong in 2019. The left and right lung scans were separated to double the size of the data set to 146. A 3-dimensional attention residual neural network was constructed to extract textural features from the CT images and reconstruct corresponding functional images. Eighty-four samples were randomly selected for training and cross-validation, and the remaining 62 were used for model testing in terms of voxel-wise agreement and function-wise concordance. To assess the voxel-wise agreement, the Spearman's correlation coefficient (R) and structural similarity index measure between the images predicted by the DLCTPM and the corresponding SPECT perfusion images were computed to assess the statistical and perceptual image similarities, respectively. To assess the function-wise concordance, the Dice similarity coefficient (DSC) was computed to determine the similarity of the low/high functional lung volumes.

Another existing technical solution is Xu Mengru ET AL: "Lung Perfusion Assessment by Bedside Electrical Impedance Tomography in Critically III Patients". This solution holds that, using a hypertonic saline solution based on first-pass kinetics, contrast EIT imaging generating dilution impedance waveforms is reliable for determining lung perfusion changes that reflect atelectasis, spatial heterogeneity, and arterial embolism in a regional manner. With the ability to monitor regional lung perfusion and generate V/Q mapping, saline bolus EIT holds promise and meaningful clinical value for patients in intensive care units. However, further studies are required to validate the impact of the described saline bolus EIT method on clinical decision-making, therapeutic management, and outcomes in critically ill patients.

### SUMMARY

The present invention provides a computer-implemented method for reconstructing a lung perfusion image based on saline contrast, including:
acquiring a saline-contrast electrical impedance dilution curve of a patient; extracting a at least one feature (a multi-parameter feature) of the saline-contrast electrical impedance dilution curve of the patient, wherein, the at least one feature comprises one or more of the following features: a maximum impedance decline value, an area under the curve, a maximum slope and an average transmission time;
generating a saline-contrast electrical impedance tomography, EIT, -based perfusion image from the saline-contrast electrical impedance dilution curve of the patient with an image reconstruction algorithm; and
inputting both the at least one feature of the saline-contrast electrical impedance dilution curve of the patient and the saline-contrast EIT-based perfusion image into a pretrained deep learning model to generate a single-photon emission computed tomography, SPECT, image reconstructed based on the saline contrast for the patient,
wherein the pretrained deep learning model is constructed according to the following process:
acquiring a saline-contrast electrical impedance dilution curve and a synchronous SPECT image;
extracting the at least one feature of the saline-contrast electrical impedance dilution curve of the patient;
generating the saline-contrast EIT-based perfusion image from the saline-contrast electrical impedance dilution curve of the patient with the image reconstruction algorithm;
inputting both the at least one feature of the saline-contrast electrical impedance dilution curve of the patient and the saline-contrast EIT-based perfusion image into the deep learning model to generate an SPECT image reconstructed based on saline contrast from the saline-contrast electrical impedance dilution curve; and
calculating a loss according to the SPECT image reconstructed based on the saline contrast and the synchronous SPECT image, conducting backpropagation, and updating parameters to obtain the pretrained deep learning model.

Further, the deep learning model is DeepLab or unet, and optionally, the deep learning model is DeepLab V3.

Further, the extracting a multi-parameter feature of the saline-contrast electrical impedance dilution curve of the patient is as follows: using one or more of eXtreme gradient boosting (XGBoost), a support vector machine (SVM), logistic regression, a random forest, a gradient boosting decision tree (GBDT), a light gradient boosted machine (LightGBM), and an artificial neural network (ANN) to extract the multi-parameter feature of the saline-contrast electrical impedance dilution curve of the patient; and feature integration is conducted for the multi-parameter feature to obtain an integrated feature to input the integrated feature into the pretrained deep learning model to generate the SPECT image reconstructed based on the saline contrast for the patient.

The present application has the following advantages:
1. The present application innovatively discloses a method where a saline-contrast electrical impedance dilution curve is reconstructed with SPECT as a standard to generate an SPECT image reconstructed based on saline contrast. In addition, the present application provides the following preferred solution: when a saline-contrast EIT-based lung perfusion image is generated from a saline-contrast electrical impedance dilution curve of a patient, a multi-parameter feature is extracted from the saline-contrast electrical impedance dilution curve of the patient to improve an accuracy of the generated saline-contrast EIT-based lung perfusion image, and then a deep learning model is used to generate an SPECT image reconstructed based on saline contrast-EIT from the saline contrast-EIT-based perfusion image.

### BRIEF DESCRIPTION OF THE DRAWINGS

In order to describe the technical solutions in the embodiments of the present application clearly, the accompanying drawings required to describe the embodiments are briefly described below. Apparently, the accompanying drawings described below are only some embodiments of the present application. Those skilled in the art may further derive other accompanying drawings based on these accompanying drawings without creative efforts.
FIG. 1 is a schematic flow chart of a method for reconstructing a lung perfusion image based on saline contrast-EIT provided in an embodiment of the present application;
FIG. 2 is a schematic flow chart of a method for reconstructing a pulsatile perfusion image provided in an embodiment of the present application;
FIG. 3 is a schematic flow chart of a lung perfusion and regional V/Q noninvasive imaging method provided in an embodiment of the present application;
FIG. 4 is a schematic flow chart of a method for image analysis of right-sided heart failure provided in an embodiment of the present application;
FIG. 5 is a schematic flow chart of a method for image analysis of an intracardiac shunt provided in an embodiment of the present application;
FIG. 6 is a schematic diagram of an apparatus provided in an embodiment of the present application;
FIG. 7 is a schematic diagram of a process of generating a SPECT image reconstructed based on saline contrast-EIT from a saline-contrast impedance dilution curve provided in an embodiment of the present application, where A1: Start holding breath, A2: Injection of saline solution, A3: Lift limb, A4: Lower limb, and A5: Platform limb;
FIG. 8 shows the main feature parameters of a saline-contrast pulmonary electrical impedance dilution curve to reflect lung perfusion provided in an embodiment of the present application;
FIG. 9 is a schematic diagram of a method for reconstructing a pulsatile perfusion image corrected by saline contrast-EIT provided in an embodiment of the present application;
FIG. 10 is a schematic diagram of a lung perfusion and regional V/Q noninvasive imaging method provided in an embodiment of the present application;
FIG. 11 shows corresponding spectra of a low-pass filter provided in an embodiment of the present application;
FIG. 12 shows corresponding spectra of a band-pass filter provided in an embodiment of the present application;
FIG. 13 shows dots in lung and heart ROIs generated through low-pass filtering and band-pass filtering respectively that are positioned as pixels with maximum values in corresponding ventilation and heartbeat standard deviation charts respectively in an embodiment of the present application;
FIG. 14 shows electrical impedance change curves of a patient with a normal heart after hypertonic saline injection provided in an embodiment of the present application, where the upper panel shows a time point of a saline to reach a heart region (the left dashed line), the lower panel shows a time point of the saline to reach a lung region (the right dashed line), and it takes 1.5 s;
FIG. 15 shows electrical impedance change curves of a patient with tricuspid regurgitation (TR) after hypertonic saline injection provided in an embodiment of the present application, where the upper panel shows a time point of a saline to reach a heart region (the left dashed line), the lower panel shows a time point of the saline to reach a lung region (the right dashed line), and it takes 3.2 s;
FIG. 16 shows impedance curves provided in an embodiment of the present application, where a time when a heart-region impedance curve begins to decline is taken as a starting time (T₀) of a saline to enter a heart ROI and a time when a lung-region impedance curve begins to decline is taken as a time (T₁) of the saline to enter a lung ROI;
FIG. 17 is a schematic diagram of right-sided heart phase imaging impedances of a patient with a ventricular septal defect-based intracardiac shunt provided in an embodiment of the present application; and
FIG. 18 is a schematic diagram of constructing different image sequence diagrams based on saline contrast curves provided in an embodiment of the present application.

### DETAILED DESCRIPTION OF THE EMBODIMENTS

To make those skilled in the art well understand the solutions of the present application, the technical solutions in the embodiments of the present application are clearly and completely described below with reference to the accompanying drawings in the embodiments of the present application.

Some processes described in the description, claims, and accompanying drawings of the present application include a plurality of operations that occur in a particular order. However, it should be clearly understood that these operations may be implemented in an order not mentioned herein or may be implemented in parallel. The serial numbers of the operations, such as S101 and S102, are only intended to distinguish different operations, and the serial numbers themselves do not indicate any order of implementation. In addition, these processes can include increased or reduced operations, and these operations can be implemented in order or in parallel.

The technical solutions of the embodiments of the present application are clearly and completely described below with reference to the accompanying drawings in the embodiments of the present application. Apparently, the embodiments are merely some rather than all of the embodiments of the present application. All other embodiments obtained by those skilled in the art based on the embodiments of the present application without creative efforts shall fall within the protection scope of the present application.

The embodiments of the present application provide a system, an apparatus, and a computer-readable storage medium. The apparatus can be a terminal, a server, etc. The terminal can be a smartphone, a tablet computer, a laptop, a personal computer (PC), etc. The server may be an independent physical server, a server cluster or a distributed system composed of a plurality of physical servers, or a cloud server providing basic cloud computing services, such as a cloud service, a cloud database, cloud computing, cloud storage, a network service, cloud communication, a middleware service, a domain name service, a security service, a content delivery network (CDN), and big data and artificial intelligence platforms. The terminal and the server may be directly or indirectly connected through wired or wireless communication, which is not limited in the present application.

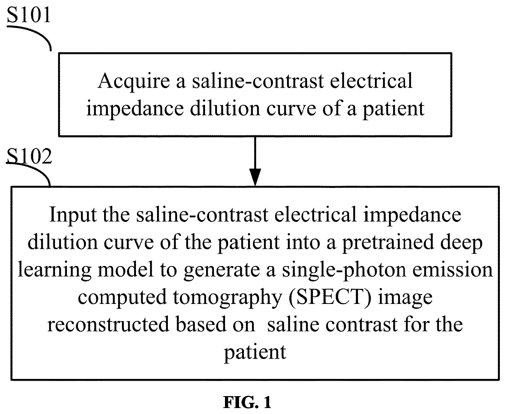

FIG. 1 is a schematic flow chart of a method for reconstructing a lung perfusion image based on saline contrast-EIT provided in an embodiment of the present application. Specifically, the method for reconstructing a lung perfusion image based on saline contrast-EIT includes the following steps:
S101: A saline-contrast electrical impedance dilution curve of a patient is acquired.

In an embodiment, the saline-contrast electrical impedance dilution curve of the patient includes a saline-contrast global impedance dilution curve of the patient, a saline-contrast heart-region impedance dilution curve of the patient, and a saline-contrast lung-region impedance dilution curve of the patient. In a specific embodiment, a saline-contrast lung-perfusion-region impedance dilution curve of the patient is acquired, and a lung perfusion region is divided into different lung perfusion sub-regions according to different division methods. Optionally, the lung perfusion sub-regions include a right ventral region, a left ventral region, a right dorsal region, and a left dorsal region. Optionally, the lung perfusion sub-regions further include a ventrolateral region, a ventromedial region, a dorsomedial region, and a dorsolateral region. Optionally, the lung perfusion region can be divided into 1,024 (32 x 32 matrix) zones (pixels).

In an embodiment, the saline-contrast electrical impedance dilution curve of the patient is acquired as follows: A breath-holding test is conducted at least for 8 s or more (when a mechanical ventilation is conducted with a ventilator, an appropriate sedation is first applied, the ventilator is adjusted to a full-control ventilation mode, and an expiration/inspiration-holding button is pressed for 10 s; and a spontaneous-breathing patient is instructed to hold her/his breath for 8 s). Only after the breath-holding test is passed, the saline-contrast EIT can be conducted. The patient is connected with a pulmonary electrical impedance monitoring instrument. 10 mL of 10% NaCl is prepared. It should be confirmed that a central venous catheter (either an internal jugular venous catheter or a subclavian venous catheter) has been established in the patient. Saline injection: Generally, two operators are required to complete this operation. After confirming that an EIT instrument works normally, one of the two operators issues a saline injection command while starting the breath-holding for the patient. After receiving a confirmation command, the other one of the two operators immediately injects the 10 mL of 10% NaCl into the patient through the central venous catheter. During the entire operation, an EIT monitoring instrument works in a recording mode, and starts to continuously acquire electrical impedance signal data of the chest 2 min before the saline injection. The whole process is required to at least last for 5 min, such that a process of lung electrical impedance declining caused by the saline injection during the breath-holding period can be completely recorded. During the breath-holding period, a time when the overall electrical impedance curve begins to decline is taken as a starting time (T₀) of the saline to enter the body, a time when a cardiac cycle is completed is taken as a starting time (T₁) of the saline to enter a pulmonary blood vessel, and the lowest point of the overall electrical impedance is taken as an end point (T₂) of the saline to pass through the pulmonary blood vessel. An electrical impedance curve in a time period T₀ to T₁ reflects that the saline enters the right-sided heart phase, but does not reflect the pulmonary vascular perfusion. An electrical impedance-time curve (maximum slope fitting) of each lung region in a time period T₁ to T₂ is used to construct a saline contrast EIT-based lung perfusion image.

S102: The saline-contrast electrical impedance dilution curve of the patient is input into a pretrained deep learning model, and an SPECT image reconstructed based on the saline contrast-EIT for the patient is generated.

In an embodiment, the pretrained deep learning model is constructed according to the following process:

A saline-contrast electrical impedance dilution curve and a synchronous SPECT image are acquired.

A deep learning model is used to generate an SPECT image reconstructed based on saline contrast-EIT from the saline-contrast electrical impedance dilution curve.

A loss is calculated according to the SPECT image reconstructed based on the saline contrast-EIT and the synchronous SPECT image, backpropagation is conducted, and parameters are updated to obtain the pretrained deep learning model.

In an embodiment, the method further includes: a multi-parameter feature of the saline-contrast electrical impedance dilution curve of the patient is extracted and input into the pretrained deep learning model, and the SPECT image reconstructed based on the saline contrast-EIT for the patient is generated.

In an embodiment, the synchronous SPECT image is acquired as follows: AXe radioactive gas of a closed system is first inhaled for lung ventilation imaging, and then a technetium 99mTc albumin aggregated injection is intravenously injected for pulmonary blood flow imaging. An SPECT image is acquired by a multi-probe r camera. An SPECT image of ventilation and perfusion in the same plane (the 4th-5th intercostal space) as EIT is selected as a training target.

In an embodiment, the deep learning model is used to generate the SPECT image reconstructed based on saline contrast-EIT from the saline-contrast electrical impedance dilution curve as follows: a multi-parameter feature of the saline-contrast electrical impedance dilution curve is extracted, and then the deep learning model is used to generate the SPECT image reconstructed based on saline contrast with the multi-parameter feature extracted from the saline-contrast electrical impedance dilution curve.

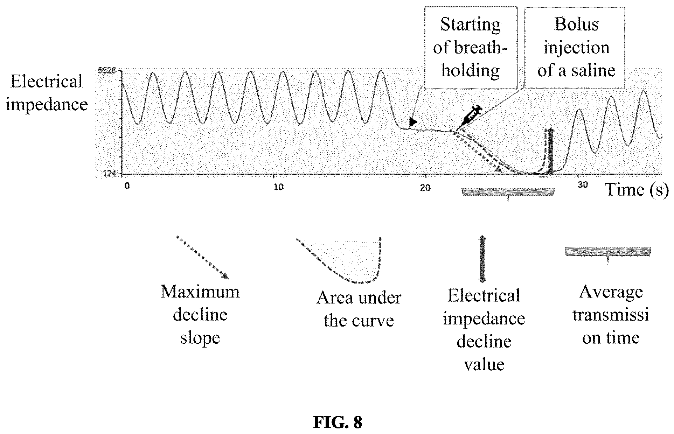

In an embodiment, the multi-parameter feature includes one or more of the following features: a maximum impedance decline value, an area under the curve, a maximum slope, an average transmission time, and a thoracic shape correction. Currently, an EIT image mainly simulates a forward model by a default elliptical profile feature, and an information distribution of a relative impedance is calculated by estimating an electrode position and a current distribution, but there is an individual difference in a thoracic cage between patients. As a result, the present application proposes to correct a thoracic shape by measuring an anterior-posterior diameter, a maximum transverse diameter, and a chest circumference of a thoracic cage during EIT. Preferably, the multi-parameter feature includes one or more of the following features: a maximum impedance decline value, an area under the curve, a maximum slope, an average transmission time, and a thoracic shape correction. The maximum impedance decline value is also called an electrical impedance decline amplitude, and the maximum slope is also called a maximum decline slope, which are detailed in FIG. 8.

In an embodiment, the deep learning model is DeepLab or unet, and preferably, the deep learning model is DeepLab V3.

In an embodiment, the multi-parameter feature of the saline-contrast electrical impedance dilution curve of the patient is extracted as follows: the multi-parameter feature of the saline-contrast electrical impedance dilution curve of the patient is extracted with a machine learning algorithm, and optionally, the multi-parameter feature of the saline-contrast electrical impedance dilution curve of the patient is extracted with one or more of XGBoost, SVM, logistic regression, a random forest, GBDT, LightGBM, and ANN.

In an embodiment, the method further includes: the multi-parameter feature of the saline-contrast electrical impedance dilution curve of the patient is extracted and subjected to feature integration to obtain an integrated feature, and the integrated feature is input into the pretrained deep learning model to generate the SPECT image reconstructed based on the saline contrast-EIT for the patient.

In an embodiment, the method includes: a saline-contrast electrical impedance dilution curve of a patient is acquired, a saline-contrast EIT-based lung perfusion image is generated from the saline-contrast electrical impedance dilution curve of the patient, and the saline-contrast EIT-based lung perfusion image is input into a pretrained deep learning model to generate the SPECT image reconstructed based on the saline contrast-EIT for the patient.

In an embodiment, the pretrained deep learning model is constructed according to the following process:
A saline-contrast electrical impedance dilution curve and a synchronous SPECT image are acquired.

A saline-contrast EIT-based lung perfusion image is generated from the saline-contrast electrical impedance dilution curve.

A deep learning model is used to generate an SPECT image reconstructed based on saline contrast-EIT from the saline-contrast EIT-based lung perfusion image.

A loss is calculated according to the SPECT image reconstructed based on the saline contrast-EIT and the synchronous SPECT image, backpropagation is conducted, and parameters are updated to obtain the pretrained deep learning model.

In an embodiment, the saline-contrast EIT-based lung perfusion image is generated from the saline-contrast electrical impedance dilution curve of the patient as follows: the saline-contrast EIT-based lung perfusion image is generated from the saline-contrast electrical impedance dilution curve of the patient with an image reconstruction algorithm, and optionally, the saline-contrast EIT-based lung perfusion image is generated from the saline-contrast electrical impedance dilution curve of the patient by a maximum slope method.

In an embodiment, the method includes: a saline-contrast electrical impedance dilution curve of a patient is acquired, a multi-parameter feature of the saline-contrast electrical impedance dilution curve of the patient is extracted, and the saline-contrast EIT-based lung perfusion image is generated with an image reconstruction algorithm. Optionally, the multi-parameter feature includes one or more of the following features: a maximum decline slope, an area under the curve, an average transmission time, and an electrical impedance decline amplitude.

In a specific embodiment, the method includes: a saline-contrast electrical impedance dilution curve of a patient is acquired, a saline-contrast EIT-based lung perfusion image is generated from the saline-contrast electrical impedance dilution curve of the patient with a traditional image reconstruction algorithm, and the saline-contrast EIT-based lung perfusion image is input into a pretrained deep learning model to generate the SPECT image reconstructed based on the saline contrast-EIT for the patient. The pretrained deep learning model is constructed according to the following process: A saline-contrast electrical impedance dilution curve and a synchronous SPECT image are acquired. A saline-contrast EIT-based lung perfusion image is generated from the saline-contrast electrical impedance dilution curve with a traditional image reconstruction algorithm. A deep learning model is used to generate an SPECT image reconstructed based on saline contrast-EIT from the saline-contrast EIT-based lung perfusion image. A loss is calculated according to the SPECT image reconstructed based on the saline contrast-EIT and the synchronous SPECT image, backpropagation is conducted, and parameters are updated to obtain the pretrained deep learning model.

In an embodiment, the method includes: A saline-contrast electrical impedance dilution curve of a patient is acquired, a multi-parameter feature of the saline-contrast electrical impedance dilution curve of the patient is extracted, and a saline-contrast EIT-based lung perfusion image is generated with an image reconstruction algorithm. The saline-contrast EIT-based lung perfusion image is input into a pretrained deep learning model to generate the SPECT image reconstructed based on the saline contrast-EIT for the patient. The pretrained deep learning model is constructed according to the following process: A saline-contrast electrical impedance dilution curve and a synchronous SPECT image are acquired. A multi-parameter feature of the saline-contrast electrical impedance dilution curve of the patient is extracted, and a saline-contrast EIT-based lung perfusion image is generated with an image reconstruction algorithm. A deep learning model is used to generate an SPECT image reconstructed based on saline contrast-EIT from the saline-contrast EIT-based lung perfusion image. A loss is calculated according to the SPECT image reconstructed based on the saline contrast-EIT and the synchronous SPECT image, backpropagation is conducted, and parameters are updated to obtain the pretrained deep learning model. The saline-contrast EIT-based lung perfusion image generated based on the multi-parameter feature is an image that can accurately reflect lung perfusion. In a specific embodiment, the multi-parameter feature includes one or more of the following features: a maximum impedance decline value, an area under the curve, a maximum slope, an average transmission time, and a thoracic shape correction. Currently, an EIT image mainly simulates a forward model by a default elliptical profile feature, and an information distribution of a relative impedance is calculated by estimating an electrode position and a current distribution, but there is an individual difference in a thoracic cage between patients. As a result, the present application proposes to optimize a simulated forward model by measuring an anterior-posterior diameter, a maximum transverse diameter, and a chest circumference of a thoracic cage during EIT. Preferably, the multi-parameter feature includes one or more of the following features: a maximum impedance decline value, an area under the curve, a maximum slope, an average transmission time, and a thoracic shape correction.

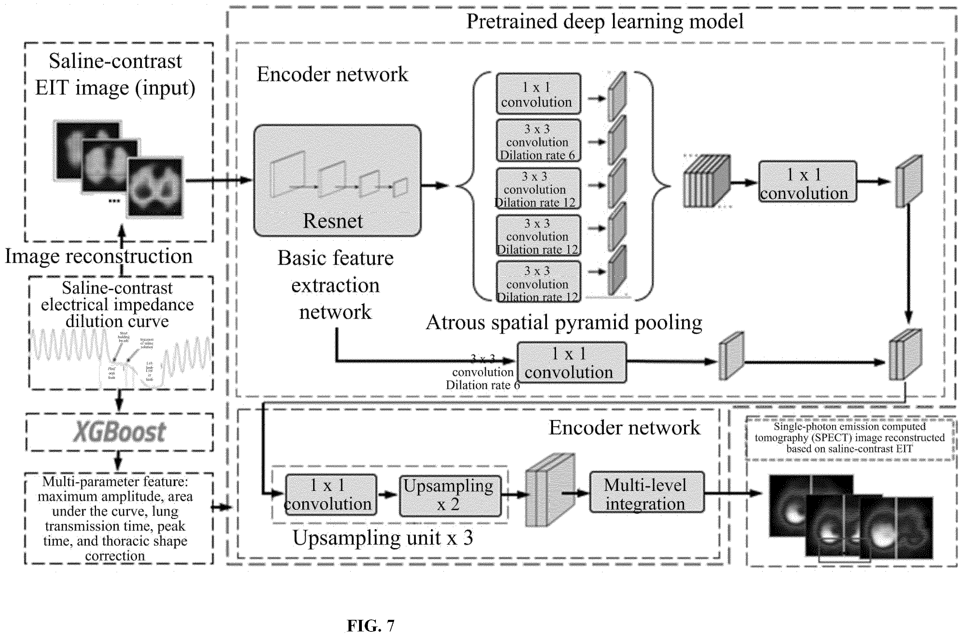

In an embodiment, as shown in FIG. 7, the method includes: A saline-contrast electrical impedance dilution curve of a patient is acquired, a multi-parameter feature of the saline-contrast electrical impedance dilution curve of the patient is extracted with XGBoost, and a saline-contrast EIT-based lung perfusion image is generated with an image reconstruction algorithm. The saline-contrast EIT-based lung perfusion image is input into a pretrained deep learning model, and the multi-parameter feature of the saline-contrast electrical impedance dilution curve of the patient is integrated to generate the SPECT image reconstructed based on the saline contrast-EIT for the patient. The pretrained deep learning model is DeepLab.

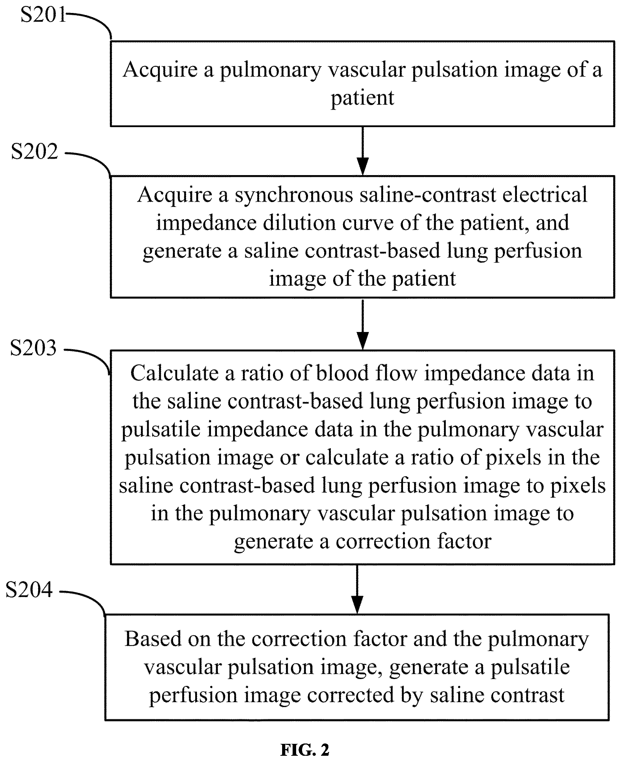

FIG. 2 is a schematic flow chart of a method for reconstructing a pulsatile perfusion image provided in an embodiment of the present application. Specifically, the method for reconstructing a pulsatile perfusion image includes the following steps:
S201: A pulmonary cardiac related pulsatility image of a patient is acquired.
S202: A synchronous saline-contrast electrical impedance dilution curve of the patient is acquired, and a saline contrast EIT-based lung perfusion image of the patient is generated.
S203: A ratio of blood flow impedance data in the saline contrast EIT-based lung perfusion image to pulsatile impedance data in the pulsation image is calculated or a ratio of pixels in the saline contrast EIT-based lung perfusion image to pixels in the pulsation image is calculated to generate a correction factor.
S204: Based on the correction factor and the pulsation image, a pulsatile perfusion image corrected by saline contrast is generated.

In an embodiment, the pulsation image of the patient is acquired as follows: band-pass filtering is conducted for an electrical impedance curve of the patient to generate the pulsation image. Specifically, a process of conducting the band-pass filtering for the electrical impedance curve of the patient is as follows: a frequency filtering technique is adopted to filter out signals at a frequency higher than or equal to 0.67 HZ (40 times/min) and lower than or equal to 2.67 HZ (160 times/min), such that impedance change signals caused by tidal breathing are filtered out and only pulsatile impedance signals related to cardiac pulsation are retained. In this way, ventilation-related signals and cardiac pulsation-related signals are separated, and an impedance curve of cardiac pulsation-related signals is obtained.

In an embodiment, a process of conducting the band-pass filtering for the electrical impedance curve to generate the pulsation image is specifically as follows: A heart-related pulsatile electrical impedance curve of each region (each pixel) is acquired by the above filtering technique. A perfusion blood flow of a pixel (a region) is reflected by an intensity of a pulsatile impedance signal of the pixel (an amplitude of each pulsatile impedance and an area under each pulsatile impedance curve). The strong the pulsatile impedance of a region, the larger the perfusion volume of the region. Thus, a perfusion-related pulsation image is further constructed with an intensity of a pulsatile impedance of each pixel. The lung perfusion region is divided into different regions of interest according to different division methods. Optionally, the lung perfusion sub-regions include a right ventral region, a left ventral region, a right dorsal region, and a left dorsal region. Optionally, the lung perfusion sub-regions further include a ventrolateral region, a ventromedial region, a dorsomedial region, and a dorsolateral region. Optionally, the lung perfusion region can be divided into 1,024 (32 x 32 matrix) zones (pixels).

In an embodiment, the saline contrast EIT-based lung perfusion image is a lung perfusion image reconstructed by the method for reconstructing a lung perfusion image based on saline contrast-EIT described above or a lung perfusion image corrected by a saline-contrast EIT image.

In an embodiment, the pulsatile perfusion image corrected by saline contrast is an SPECT image reconstructed based on saline contrast or a saline contrast EIT-based lung perfusion image. Specifically, when the correction factor is a ratio of pixels of the saline contrast EIT-based lung perfusion image to pixels of the pulsation image, a pulsatile perfusion image corrected by saline contrast is generated based on the correction factor and the pulsation image. When the correction factor is a ratio of pixels of the SPECT image reconstructed based on saline contrast and pixels of the pulsation image, an SPECT image reconstructed based on saline contrast is generated based on the correction factor and the pulsation image.

In an embodiment, the correction factor refers to a correction factor for each lung perfusion region, and the lung perfusion region is divided into different regions of interest according to different division methods. Preferably, the correction factor refers to a correction factor for each lung perfusion region, and the lung perfusion region is divided into different regions of interest according to different division methods; optionally, the lung perfusion sub-regions include a right ventral region, a left ventral region, a right dorsal region, and a left dorsal region; and optionally, the lung perfusion sub-regions further include a ventrolateral region, a ventromedial region, a dorsomedial region, and a dorsolateral region.

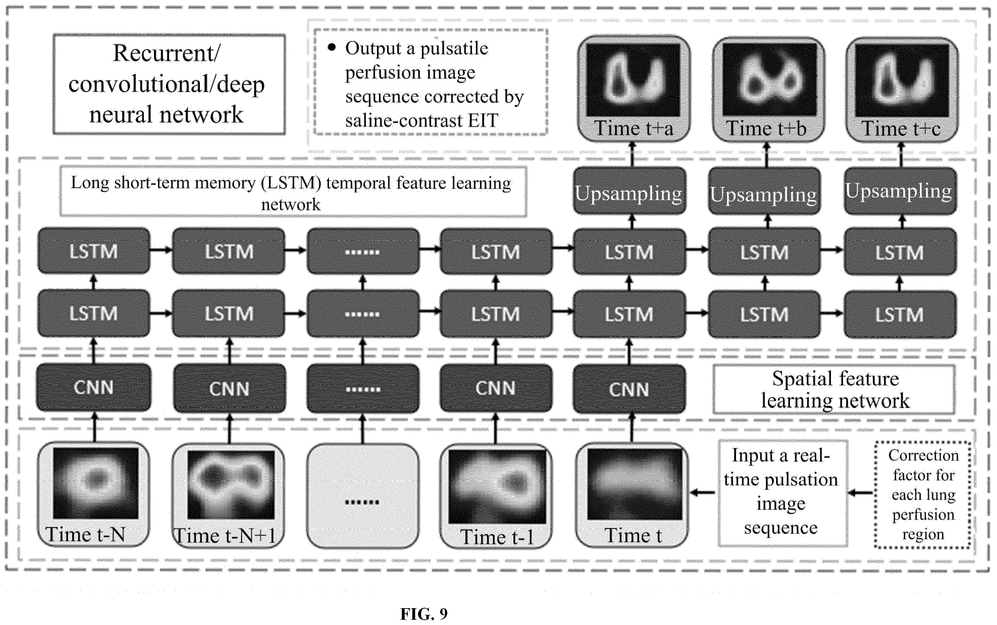

In an embodiment, the pulsation image refers to a real-time pulmonary cardiac related pulsatility image sequence, and the pulsatile perfusion image corrected by saline contrast refers to a real-time pulsatile perfusion image sequence corrected by saline contrast. In a specific embodiment, as shown in FIG. 9, a recurrent/convolutional/deep neural network is adopted to generate and output a pulsatile perfusion image sequence corrected by saline contrast based on the real-time pulmonary cardiac related pulsatility image sequence.

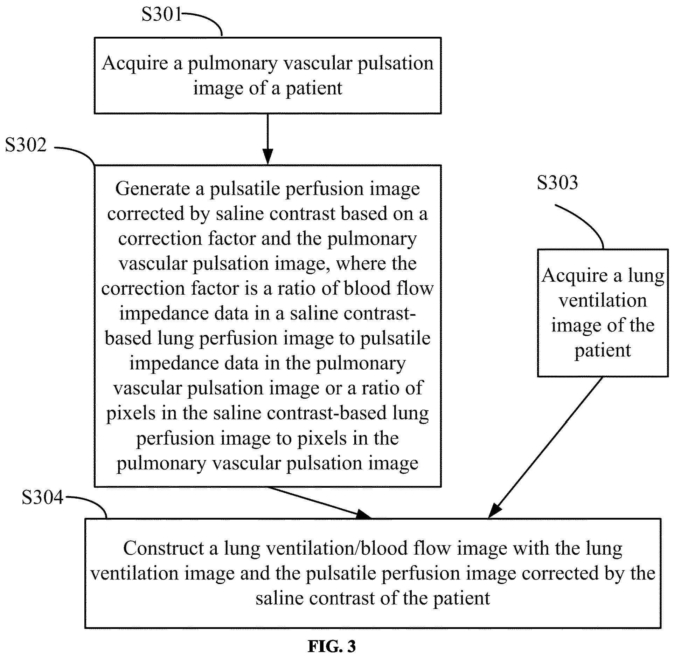

FIG. 3 is a schematic flow chart of a lung perfusion and regional V/Q noninvasive imaging method provided in an embodiment of the present application. Specifically, the lung perfusion and regional V/Q noninvasive imaging method includes the following steps:
S301: A pulmonary cardiac related pulsatility image of a patient is acquired.
S302: A pulsatile perfusion image corrected by saline contrast is generated based on a correction factor and the pulsation image. The correction factor is a ratio of blood flow impedance data in a saline contrast EIT-based lung perfusion image to pulsatile impedance data in the pulsation image or a ratio of pixels in the saline contrast EIT-based lung perfusion image to pixels in the pulsation image.
S303: A lung ventilation image of the patient is acquired.
S304: A lung ventilation/blood flow image is constructed with the lung ventilation image and the pulsatile perfusion image corrected by saline contrast-EIT of the patient.

In an embodiment, the pulsatile perfusion image corrected by saline contrast is generated based on the correction factor and the pulsation image as follows: the pulsatile perfusion image corrected by saline contrast is generated by the method for reconstructing a pulsatile perfusion image based on saline contrast shown in FIG. 2.

In an embodiment, the lung ventilation/blood flow image is constructed as follows: the lung ventilation image and the pulsatile perfusion image corrected by saline contrast-EIT of the patient are used to construct the lung ventilation/blood flow image with 20% of a maximum pixel as a threshold. Optionally, the lung ventilation/blood flow image is constructed with the lung ventilation image of the patient, the pulsatile perfusion image corrected by saline contrast-EIT of the patient, and a cardiac output and/or a minute ventilation.

In an embodiment, the lung ventilation image of the patient refers to a real-time lung ventilation image sequence of the patient, the pulsatile perfusion image corrected by saline contrast-EIT of the patient refers to a real-time pulsatile perfusion image sequence corrected by saline contrast-EIT of the patient, and a real-time lung ventilation/blood flow image sequence is constructed with the real-time lung ventilation image sequence of the patient and the real-time pulsatile perfusion image sequence corrected by saline contrast-EIT of the patient.

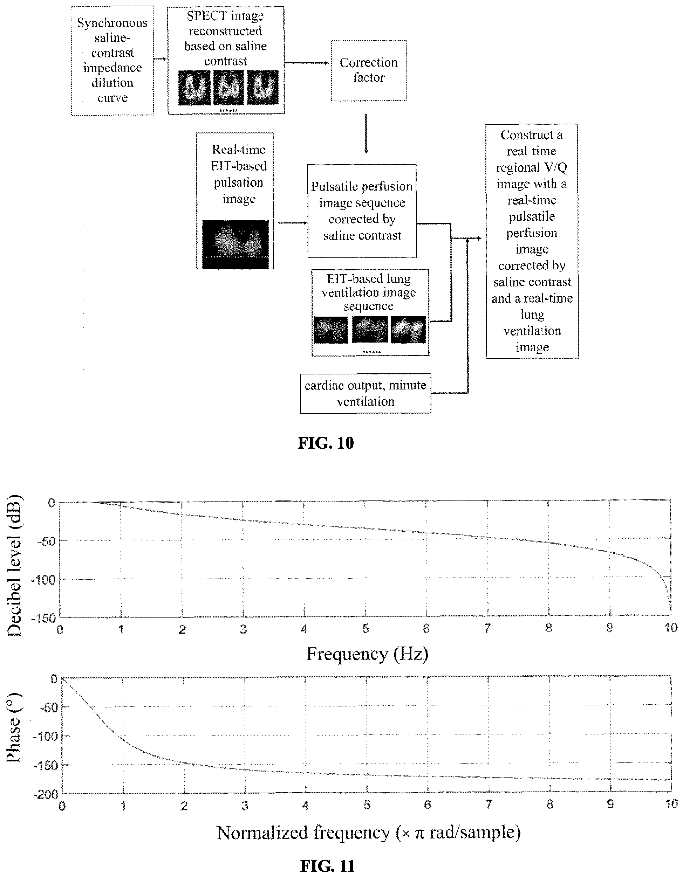

In a specific embodiment, as shown in FIG. 10, a real-time lung ventilation image of the patient is acquired, a pulmonary cardiac related pulsatility image is generated through band-pass filtering of an electrical impedance curve of the patient, a real-time pulsatile perfusion image corrected by saline contrast is generated based on a correction factor and the pulsation image, and a real-time lung ventilation/blood flow image is constructed with the real-time lung ventilation image and the real-time pulsatile perfusion image corrected by saline contrast-EIT of the patient. Preferably, when the real-time lung ventilation/blood flow image is constructed, a cardiac output and/or a minute ventilation is/are introduced for further improvement to obtain an optimized real-time lung ventilation/blood flow image.

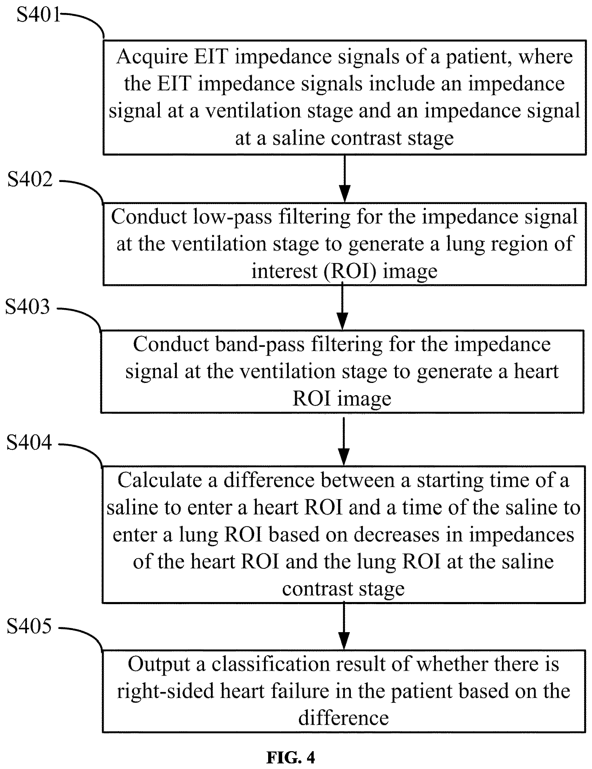

FIG. 4 is a schematic flow chart of a method for image analysis of right-sided heart failure provided in an embodiment of the present application. Specifically, the method for image analysis of right-sided heart failure includes the following steps:
S401: EIT impedance signals of a patient are acquired. The EIT impedance signals include an impedance signal at the ventilation stage and an impedance signal at a saline contrast-EIT stage.

In an embodiment, before the injection of a contrast agent starts, a ventilator is set by a physician to an end-expiratory hold status, and the end-expiratory hold status lasts for a specified period of time. During this period of time, 10 mL of hypertonic saline with a concentration of 10% is immediately injected through a superior vena cava, and an impedance change of EIT is observed. Then, a mechanical ventilation is restored immediately. The impedance signal at the ventilation stage is acquired at the mechanical ventilation stage. The impedance signal at the saline contrast-EIT stage is acquired after the saline injection at the end-expiratory hold status.

In a specific embodiment, the saline-contrast EIT impedance signals of the patient are acquired through the following steps:
(1) A breath-holding test is conducted, and at least 8 s is required for the right-sided heart phase and a lung phase. Due to an impact of a cardiopulmonary transmission time, in order to well construct a left-sided heart phase image, at least 15 s or more is required, and a breath-holding time can be further extended if necessary.
(2) A saline is injected for ventricular blood flow imaging, and an electrical impedance signal change of a chest is continuously acquired during the breath-holding period.

Further, specific operations of the step (1) are as follows: A breath-holding test is conducted at least for 8 s or more (when a mechanical ventilation is conducted with a ventilator, an expiration/inspiration-holding button is pressed for 8 s; and a spontaneous-breathing patient is instructed to hold her/his breath for 8 s). Only after the breath-holding test is passed, the saline-contrast EIT can be conducted. A concentration of the saline is 10%, and 10 mL of the saline is injected.

Further, specific operations of the step (2) are as follows: A subject is connected with a pulmonary electrical impedance monitoring instrument. 10 mL of 10% NaCl is prepared. It should be confirmed that a central venous catheter has been established in the subject. 1 s after the breath-holding starts, the 10 mL of 10% NaCl is synchronously and rapidly injected into the body through the central venous catheter for pulmonary blood perfusion imaging. An electrical impedance signal change of a chest is continuously acquired.

An impedance curve is constructed based on a total relative impedance-time curve in a thoracic cavity of the patient during the entire process. Those skilled in the art can clearly divide an impedance into three parts, namely, a ventilation part, an end-expiratory hold part, and a ventilation part, so as to obtain an impedance signal at a ventilation stage and an impedance signal at a saline contrast-EIT stage.

S402: Low-pass filtering is conducted for the impedance signal at the ventilation stage to generate a lung ROI image.

In an embodiment, the low-pass filtering is conducted for the impedance signal at the ventilation stage, and the lung ROI image is calculated with a standard deviation according to the following formula:
${δ}_{v} = \sqrt{\frac{\sum {\left({v}_{i}-\hat{v}\right)}^{2}}{N}}$
where δᵥ represents a standard deviation of an impedance signal change after the low-pass filtering, vᵢ represents a change of a signal of a pixel i within a period of time, *ν̂* represents a mean, and N represents a number of frames within the period of time.

In an embodiment, a low-pass filter is used to conduct the low-pass filtering for the impedance signal at the ventilation stage to generate the lung ROI image, and a frequency of the low-pass filter is set to less than 50/minute. Specifically, breath-related signals are separated with a third-order butterworth filter, and the frequency of the low-pass filter is set to 50/min (about 0.83 Hz). Corresponding spectra of the low-pass filter are shown in FIG. 11.

S403: Low-pass filtering is conducted for the impedance signal at the ventilation stage to generate a lung ROI image.

In an embodiment, the band-pass filtering is conducted for the impedance signal at the ventilation stage, and the heart ROI image is calculated with a standard deviation according to the following formula:
${δ}_{q} = \sqrt{\frac{\sum {\left({q}_{i}-\hat{q}\right)}^{2}}{N}}$
where δ_{q} represents a standard deviation of an impedance signal change after the band-pass filtering, qᵢ represents a change of a signal of a pixel i within a period of time, g̅ represents a mean, and N represents a number of frames within the period of time.

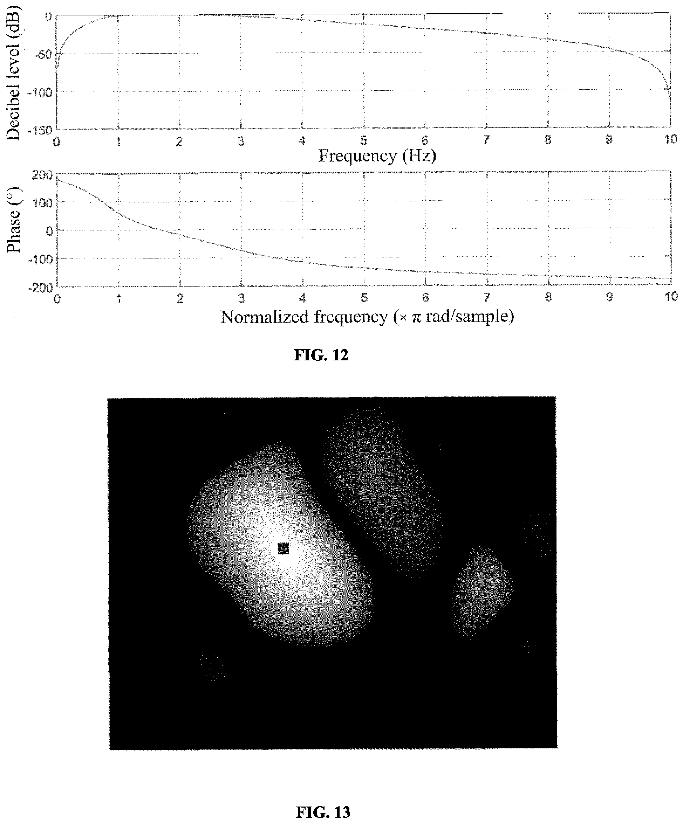

In an embodiment, heartbeat-related signals are separated with a third-order butterworth filter, and a frequency of a band-pass filter is set to 50/min to 200/min (0.83 Hz to 3.33 Hz). Corresponding spectra of the band-pass filter are shown in FIG. 12.

In a specific embodiment, lung and heart ROIs are determined by the above process, and the dots in FIG. 13 are positioned as pixels with maximum values in corresponding ventilation and heartbeat standard deviation charts, respectively.

S404: A difference between a starting time of a saline to enter a heart ROI and a time of the saline to enter a lung ROI is calculated based on decreases in impedances of the heart ROI and the lung ROI at the saline contrast-EIT stage.

In an embodiment, with a time when an impedance of the heart ROI begins to decrease as a starting time of the saline to enter the heart ROI (T₀) and a time when an impedance of the lung ROI begins to decrease as a time of the saline to enter the lung ROI (T₁), a difference between the starting time of the saline to enter the heart ROI and the time of the saline to enter the lung ROI is calculated.

In a specific embodiment, a right-sided heart phase image at a saline contrast-EIT stage is constructed specifically as follows: During a breath-holding period, a time when the overall electrical impedance curve begins to decline is taken as a starting time (T₀) of a saline to enter a heart, and a time when an impedance of a specific lung ROI begins to decrease is taken as a time point (T₁) of the saline to enter a pulmonary blood vessel and reach a lung region. Therefore, an electrical impedance curve in a time period T₀ to T₁ mainly reflects a period when the saline mainly enters and gathers in a right-sided heart phase. A slope of an electrical impedance-time curve in the time period T₀ to T₁ is calculated to construct the right-sided heart phase image. The calculated slope of the electrical impedance-time curve corresponds to a time window of 0.5 s and a step size of 0.5 s. A right-sided heart phase image is constructed by analyzing each 0.5 s window in the time period T₀ to T₁.

More specifically, an optimal slope of an ith pixel in a right-sided heart phase image is calculated according to the following formula:
${Δz}_{i} \left({t}_{n}\right) = {a}_{i} {t}_{n} + b$
where tₙ represents a nth time window in the time period T₀ to T₁, aᵢ represents an optimal slope of a least squares fitting curve, Δ*zᵢ*(*tₙ*) represents a relative impedance value of a pixel i at a specific time, and b represents an intercept.

In an end-expiratory hold status, a breath-related impedance change is almost zero, and the impedance change is mainly affected by blood perfusion. After the injection of a hypertonic saline, an impedance of a region corresponding to a pixel decreases, and features such as a color scale and a pixel change correspondingly. Time points of the saline to enter heart and lung ROIs can be detected based on changes in features such as a color scale and a pixel.

S405: A classification result of whether there is the right-sided heart failure in the patient is output based on the difference.

In an embodiment, when the difference exceeds a threshold, a classification result that there is the right-sided heart failure in the patient is output. Specifically, the threshold refers to a threshold or a threshold range determined based on statistical results of a difference between a starting time of the saline to enter a heart ROI and a time of the saline to enter a lung ROI for a population without the right-sided heart failure.

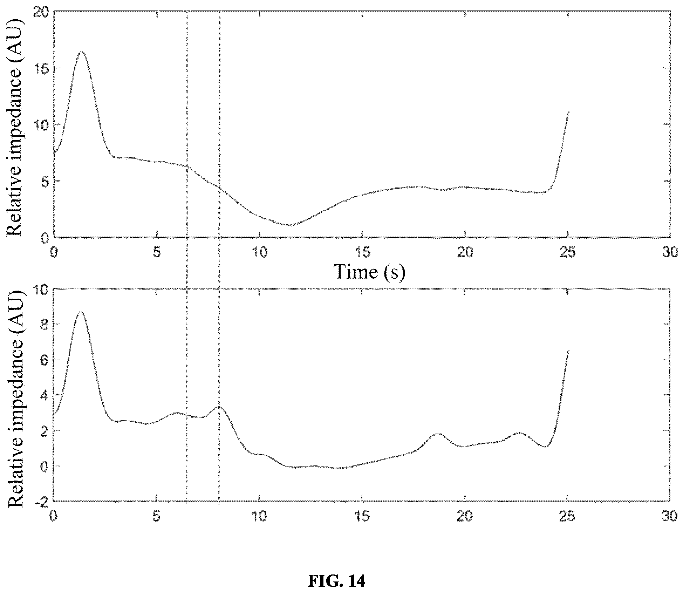

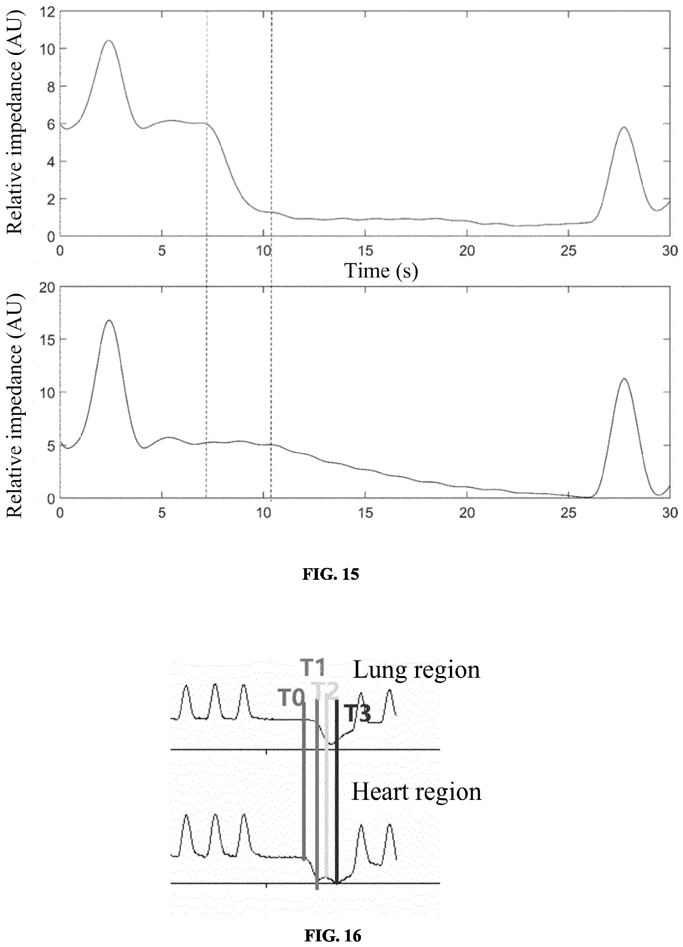

In a specific embodiment, FIG. 14 shows electrical impedance change curves of a patient with a normal heart after hypertonic saline injection provided in the embodiment of the present application, where the upper panel shows a time point of a saline to reach a heart region (the left dashed line), the lower panel shows a time point of the saline to reach a lung region (the right dashed line), and it takes 1.5 s, and FIG. 15 shows electrical impedance change curves of a patient with TR after hypertonic saline injection provided in the embodiment of the present application, where the upper panel shows a time point of a saline to reach a heart region (the left dashed line), the lower panel shows a time point of the saline to reach a lung region (the right dashed line), and it takes 3.2 s. Specifically, when the difference is higher than a threshold of 2.5 s, a classification result that there is the right-sided heart failure in the patient is output, and when the difference is lower than the threshold of 2.5 s, a classification result that there is not the right-sided heart failure in the patient is output.

The right-sided heart failure includes a valvular disease, an embolic disease, a chronic lung disease, idiopathic pulmonary arterial hypertension, congenital heart disease, etc. In the above diseases, there is a decrease in an amount or a rate of a blood output of a right-sided heart caused by a dysfunction of the right-sided heart, which extends a time of a concentrated saline to flow with a blood flow from a right atrium and a right ventricle to a lung.

In a specific embodiment, the right-sided heart failure is TR. TR is a common valvular disease that can be caused by the volume and pressure overload of a right ventricle or the dilation of a cardiac chamber. According to pathological changes, tricuspid diseases can be divided into tricuspid atresia, tricuspid insufficiency, Ebstein anomaly, etc. The method of the present application can allow the early surveillance of the above diseases.

In a specific embodiment, the right-sided heart failure is an embolic disease. Pulmonary embolisms are the most common causes of acute right ventricular overload in adults. Thus, the method of the present application can allow the early surveillance of embolic diseases such as pulmonary embolisms.

In a specific embodiment, the right-sided heart failure is a chronic lung disease. A pulmonary heart disease can manifest as a right ventricular dysfunction and right-sided heart failure of asymptomatic right ventricular hypertrophy. Thus, the method of the present application can allow the early surveillance of chronic lung diseases.

In a specific embodiment, the right-sided heart failure is a congenital heart disease. Congenital heart diseases include right ventricular overload due to a combination of a large atrial septal defect and a left-to-right shunt, pulmonary regurgitation after tetralogy of Fallot repair surgery, congenital right atrioventricular Ebstein anomaly, right ventricular outflow tract mechanical obstruction, hemodynamically-significant transposition of the great arteries, etc. Thus, the method of the present application can allow the early surveillance of the above diseases.

In an embodiment of the present application, a method for image analysis of right-sided heart failure based on saline contrast is provided, mainly including the following steps:
EIT impedance signals of a patient are acquired. The EIT impedance signals include an impedance signal at a ventilation stage and an impedance signal at a saline contrast-EIT stage.

Low-pass filtering is conducted for the impedance signal at the ventilation stage to generate a lung-region impedance curve.

Band-pass filtering is conducted for the impedance signal at the ventilation stage to generate a heart-region impedance curve.

With a time when the heart-region impedance curve begins to decline as a starting time (T₀) of a saline to enter a heart ROI and a time when the lung-region impedance curve begins to decline as a time (T₁) of the saline to enter a lung ROI, a difference between the starting time of the saline to enter the heart ROI and the time of the saline to enter the lung ROI is calculated.

A classification result of whether there is the right-sided heart failure in the patient is output based on the difference.

In a specific embodiment, the method includes:

The EIT impedance signals of the patient are acquired. The EIT impedance signals include the impedance signal at the ventilation stage and the impedance signal at the saline contrast-EIT stage.

Low-pass filtering is conducted for the impedance signal at the ventilation stage to generate a lung ROI image and a lung-region impedance curve.

Band-pass filtering is conducted for the impedance signal at the ventilation stage to generate a heart ROI image and a heart-region impedance curve.

Based on decreases in impedances of the heart ROI and the lung ROI at the saline contrast-EIT stage, a difference between a starting time of the saline to enter the heart ROI and a time of the saline to enter the lung ROI is calculated as a first difference.

With a time when the heart-region impedance curve begins to decline as a starting time (T₀) of the saline to enter the heart ROI and a time when the lung-region impedance curve begins to decline as a time (T₁) of the saline to enter the lung ROI, a difference between the starting time of the saline to enter the heart ROI and the time of the saline to enter the lung ROI is calculated as a second difference.

A classification result of whether there is the right-sided heart failure in the patient is output based on the first difference and/or the second difference or an average value of the first difference and the second difference.

In a specific embodiment, the classification result can be output with reference to both the first difference calculated based on the images and the second difference calculated based on the impedance curves or an average value of the first difference and the second difference.

In an embodiment, during a breath-holding period, a time when the overall electrical impedance curve begins to decline is taken as a starting time (T₀) of a saline to enter a heart region, and a time when an impedance in a lung region begins to decline is taken as a time point (T₁) of the saline to enter a pulmonary blood vessel and reach a lung region. Specifically, the starting time (T₀) of the saline to enter the heart region and the time (T₁) of the saline to enter the lung region are shown in FIG. 16. When the saline flows back to the heart region, an impedance-time curve of the heart region declines once again. The decline starts at a time point T₂, and a time point of a second valley bottom is set as T₃.

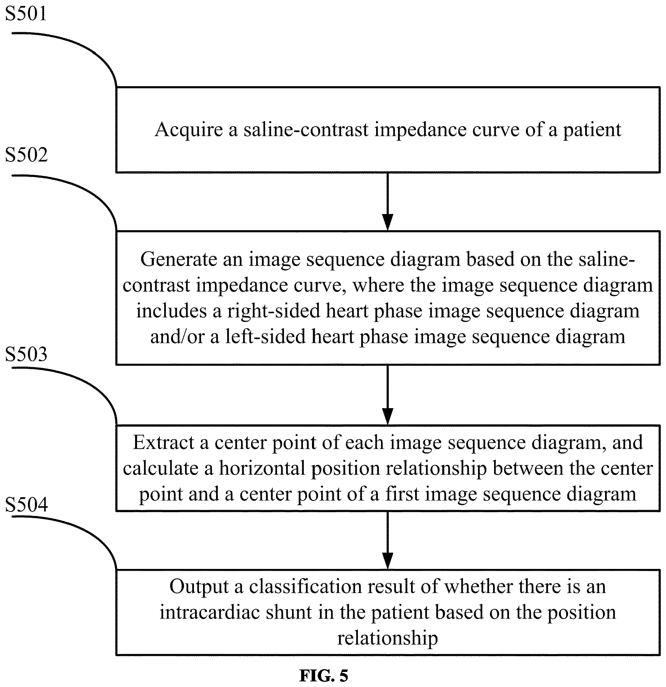

FIG. 5 is a schematic flow chart of a method for image analysis of an intracardiac shunt provided in an embodiment of the present application. Specifically, the method for image analysis of an intracardiac shunt includes the following steps:
S501: A saline-contrast impedance curve of a patient is acquired.

In an embodiment, the saline-contrast impedance curve of the patient includes a series of electrical impedance changes when a concentrated saline flows with a blood flow through a superior vena cava → a right atrium, a right ventricle→ a pulmonary circulation→ a left atrium, and a left ventricle → an aorta.

The saline-contrast impedance curve in the present application is also called a saline-contrast impedance dilution curve.

S502: An image sequence diagram is generated based on the saline-contrast impedance curve. The image sequence diagram includes a right-sided heart phase image sequence diagram and/or a left-sided heart phase image sequence diagram.

In an embodiment, the right-sided heart phase image sequence diagram is obtained by reconstructing a right-ventricle blood-flow contrast impedance curve in a time period T₀ to T₁ in the saline-contrast impedance curve, and the left-sided heart phase image sequence diagram is obtained by reconstructing a left-ventricle blood-flow contrast impedance curve in a time period T₂ to T₃ in the saline-contrast impedance curve.

In a specific embodiment, the right-sided heart phase image sequence diagram is acquired specifically as follows: As shown in FIG. 2, during a breath-holding period, a time when the overall electrical impedance curve begins to decline is taken as a starting time (T₀) of a saline to enter a heart, and a time when an impedance of a specific lung ROI begins to decrease is taken as a time point (T₁) of the saline to enter a pulmonary blood vessel and reach a lung region. Therefore, an electrical impedance curve in a time period T₀ to T₁ mainly reflects a period when the saline enters and gathers in a right-sided heart phase. A slope of an electrical impedance-time curve in the time period T₀ to T₁ is calculated, and each pixel of the right-sided heart phase image is constructed by analyzing each time window in the time period T₀ to T₁. Specifically, the calculated slope of the electrical impedance-time curve in the time period T₀ to T₁ corresponds to a time window of 0.5 s and a step size of 0.5 s. Specifically, the time window division for the time period T₀ to T₁ is as follows: T₀ to T₀ + 0.5 s, T₀ + 0.5 s to T₀ + 1.0 s, ... T₁-0.5 s to T₁. That is, a right-sided heart phase image is constructed by analyzing each 0.5 s window in the time period T₀ to T₁. More specifically, an optimal slope of an ith pixel in the right-sided heart phase image sequence diagram is calculated according to the following formula:${Δz}_{i} \left({t}_{n}\right) = {a}_{i} {t}_{n} + b$
where tₙ represents a nth time window in the time period T₀ to T₁, aᵢ represents an optimal slope of a least squares fitting curve, Δ*zᵢ*(*tₙ*) represents a relative impedance value of a pixel i at a specific time, and b represents an intercept.

In a specific embodiment, the left-sided heart phase image sequence diagram is acquired specifically as follows: As shown in FIG. 2, when the saline flows back to a pixel in the heart region, a time when the impedance-time curve begins to decline once again is defined as a time point T₂, and a time point of a second valley bottom is defined as T₃. Therefore, an electrical impedance curve in a time period T₂ to T₃ mainly reflects a period when the saline enters and gathers in a left-sided heart phase. A slope of an electrical impedance-time curve in the time period T₂ to T₃ is calculated, and each pixel of a left-sided heart phase image is constructed by analyzing each time window in the time period T₂ to T₃. The heart region is determined as follows: During a time period T₀ to T₁, a slope of a pixel with a maximum slope is designated as aₘₐₓ, and a pixel with a slope a of more than 20% × aₘₐₓ is defined as the heart region. During the time period T₂ to T₃, an impedance decline slope c of an ith pixel in the left-sided heart phase image sequence diagram is calculated according to the following formula:${Δz}_{i} \left({t}_{m}\right) = {c}_{i} {t}_{m} + d$
where tₘ represents a mth time window in the time period T₂ to T₃, cᵢ represents an optimal slope of a least squares fitting curve, Δ*zᵢ*(*tm*) represents a relative impedance value of a pixel i at a specific time in the time period T₂ to T₃, and b represents an intercept.

S503: A center of heart of each image sequence diagram is extracted, and a horizontal position relationship between the center of heart and a center of heart of a first image sequence diagram is calculated.

In an embodiment, a horizontal position of the center of heart of the sequence diagram is determined according to the following formula:
$CoH \left({t}_{k}\right) = \frac{\sum \left({x}_{i}\times {f}_{i}\right)}{\sum {f}_{i}} \times 100 %$
where i represents a heart region H, xᵢ represents an x-coordinate of an ith pixel, fᵢ represents an optimal impedance decline slope of a least squares fitting curve of the ith pixel, CoH(tₖ) represents an x-coordinate of a center of a heart at a time tₖ, and tₖ represents a kth time window.

Further, the heart region H is a pixel with an impedance decline slope f of more than 20% × fₘₐₓ, and fₘₐₓ represents a slope of a pixel with a maximum slope. Specifically, the impedance decline slope f is calculated according to the following formula:
${Δz}_{i} \left({t}_{k}\right) = {f}_{i} {t}_{k} + e$
where *Δzᵢ*(*tₖ*) represents a relative impedance value of the ith pixel at the time *tₖ* and e represents an intercept.

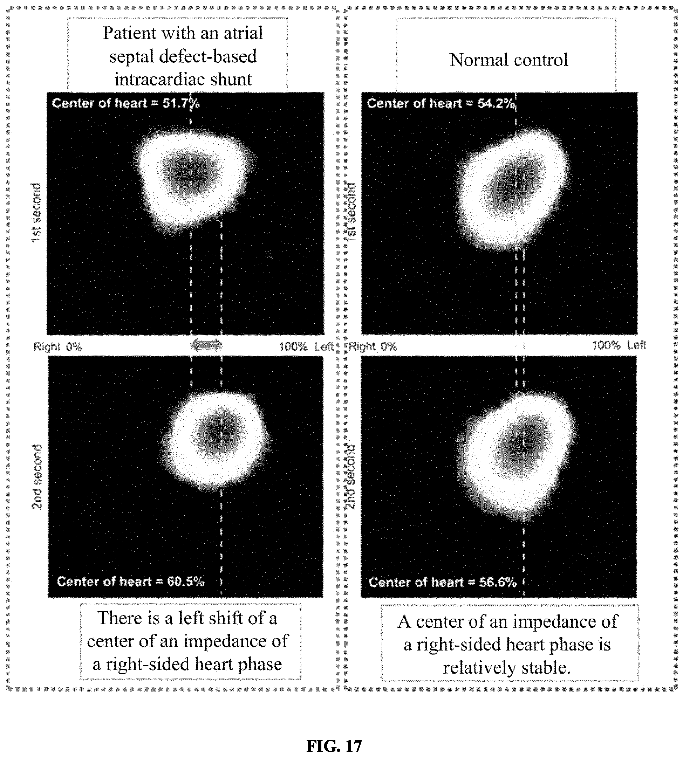

In a specific embodiment, as shown in FIG. 17, a position relationship is determined by calculating a horizontal position shift of a center of a right-sided heart imaging impedance.

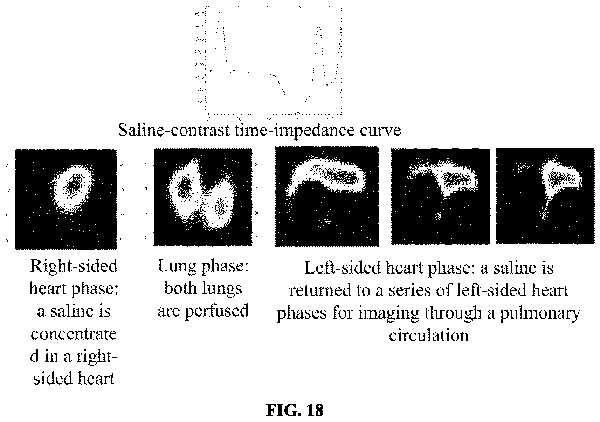

In an extensive embodiment, each image sequence is obtained by constructing a series of impedance images based on a saline-contrast impedance curve, and the constructed image sequence diagram also includes images of different sequences constructed based on a saline-contrast time-impedance curve shown in FIG. 18: a right-sided heart phase where a saline is concentrated in a right-sided heart, a lung phase where both lungs are perfused, and a left-sided heart phase where a saline is returned to a series of left-sided heart phases for imaging through a pulmonary circulation.

S504: A classification result of whether there is the intracardiac shunt in the patient is output based on the horizontal position relationship.

In an embodiment, during the right-sided heart imaging, whether there is an intracardiac right-to-left shunt in the patient is determined by determining whether there is a left shift of a center of a right-sided heart imaging impedance.

In an embodiment, during the left-sided heart imaging, whether there is an intracardiac left-to-right shunt in the patient is determined by determining whether there is a right shift of a center of saline concentration.

As shown in FIG. 17, a shift of a center of a right-sided heart imaging impedance is calculated according to a position relationship to determine whether there is a right-to-left shunt. As shown in this figure, the left panel shows that there is a left shift of a center of a right-sided heart imaging impedance (+ 9.2%) in a patient with an atrial septal defect-based intracardiac shunt, and the right panel shows that a left shift of a center of a right-sided heart imaging impedance (-2.4%) in a normal control is not significant. Therefore, the determination of whether there is an intracardiac right-to-left shunt by monitoring whether there is a left shift of a center of saline concentration in a right-sided heart phase during saline-contrast EIT is a bedside, non-invasive, and radiation-free practical method.

In a complete specific embodiment, the method for image analysis of an intracardiac shunt based on saline contrast shown in FIG. 5 further includes a method for analysis of an intracardiac right-to-left shunt based on saline contrast and a method for analysis of an intracardiac left-to-right shunt based on saline contrast.

A method for analysis of an intracardiac right-to-left shunt based on saline contrast provided in an embodiment of the present application mainly includes the following steps:
Step 1: A saline-contrast impedance curve of a patient is acquired.
Step 2: Aright-sided heart phase image sequence diagram is generated based on the saline-contrast impedance curve.
Step 3: A center of heart of each image sequence diagram in the right-sided heart phase image sequence diagram is extracted, and a horizontal position relationship between the center of heart and a center of heart of a first image sequence diagram is calculated.
Step 4: Based on whether the horizontal position relationship indicates a left shift, a classification result of whether there is an intracardiac right-to-left shunt in the patient is output.

More specifically, a slope of an electrical impedance-time curve in the time period T₀ to T₁ is calculated, a time window corresponding to the slope is calculated, and a right-sided heart image corresponding to each time window is constructed to obtain a right-sided heart phase image sequence diagram. Preferably, the calculated slope of the electrical impedance-time curve corresponds to a time window of 0.5 s and a step size of 0.5 s. That is, the time window division for the time period T₀ to T₁ is as follows: T₀ to T₀ + 0.5 s, T₀ + 0.5 s to T₀ + 1.0 s, ... T₁-0.5 s to T₁.

Each image sequence in the right-sided heart phase image sequence diagram corresponds to a right-sided heart image constructed in each 0.5 s time window in the time period T₀ to T₁ analyzed in the step 2.

Further, the first image sequence in the step 3 refers to a right-sided heart image constructed in a time window T₀ to T₀ + 0.5 s, and a horizontal position of a center of heart of the first image sequence is calculated as follows:
$CoH \left({t}_{1}\right) = \frac{\sum \left({x}_{i}\times {a}_{i}\right)}{\sum {a}_{i}} \times 100 % .$

Further, a horizontal position of a center of heart of each image sequence diagram in the right-sided heart phase image sequence diagram is calculated as follows:
$CoH \left({t}_{n}\right) = \frac{\sum \left({x}_{i}\times {a}_{i}\right)}{\sum {a}_{i}} \times 100 %$
where xᵢ represents an x-coordinate of a pixel i, and the pixel i belongs to a heart region; CoH(*tₙ*) represents an x-coordinate of a center of heart of a heart at a time tₙ; and tₙ represents a nth time window in the time period T₀ to T₁.

Further, the horizontal position relationship refers to a relative position shift obtained by comparing *CoH*(*tₙ*) with *CoH*(*t*₁). That is, when *CoH*(*tₙ*) *< CoH*(*t*₁), the horizontal position relationship indicates that there is a left shift, and when *CoH*(*tₙ*) ≥ *CoH*(*t*₁), the horizontal position relationship indicates that there is no left shift.

When the horizontal position relationship indicates that there is a left shift, a classification result that there is an intracardiac right-to-left shunt in the patient is output. When the horizontal position relationship indicates that there is no left shift, a classification result that there is no intracardiac right-to-left shunt in the patient is output.

A method for analysis of an intracardiac left-to-right shunt based on saline contrast provided in an embodiment of the present application mainly includes the following steps:
Step 1: A saline-contrast impedance curve of a patient is acquired.
Step 2: A left-sided heart phase image sequence diagram is generated based on the saline-contrast impedance curve.
Step 3: A center of heart of each image sequence diagram in the left-sided heart phase image sequence diagram is extracted, and a horizontal position relationship between the center of heart and a center of heart of a first image sequence diagram is calculated.
Step 4: Based on whether the horizontal position relationship indicates a right shift, a classification result of whether there is an intracardiac left-to-right shunt in the patient is output.

The left-sided heart phase image sequence diagram is obtained by reconstructing a left-ventricle blood-flow contrast impedance curve in a time period T₂ to T₃ in the saline-contrast impedance curve.

Each image sequence in the left-sided heart phase image sequence diagram corresponds to a left-sided heart image constructed in each time window in the time period T₂ to T₃ analyzed in the step 2.

Further, the first image sequence in the step 3 refers to a left-sided heart image constructed in a first time window, and a horizontal position *CoH*(*t*₁₁) of a center of heart of the first image sequence is calculated as follows:
$CoH \left({t}_{11}\right) = \frac{\sum \left({x}_{i}\times {c}_{i}\right)}{\sum {c}_{i}} \times 100 % .$

Further, a horizontal position of a center of heart of each image sequence diagram in the left-sided heart phase image sequence diagram is calculated as follows:
$CoH \left({t}_{m}\right) = \frac{\sum \left({x}_{i}\times {c}_{i}\right)}{\sum {c}_{i}} \times 100 %$
where xᵢ represents an x-coordinate of a pixel i, and the pixel i belongs to a heart region; CoH(*tₘ*) represents an x-coordinate of a center of heart of a heart at a time tₘ; and tₘ represents a mth time window in the time period T₂ to T₃.

Further, the horizontal position relationship refers to a relative position shift obtained by comparing *CoH*(*tₘ*) with *CoH*(*t*₁₁). That is, when *CoH*(*tₘ*) ≤ *CoH*(*t*₁₁), the horizontal position relationship indicates that there is no right shift, and when *CoH*(*tₘ*) *> CoH*(*t*₁₁), the horizontal position relationship indicates that there is a right shift.

When the horizontal position relationship indicates that there is a right shift, a classification result that there is an intracardiac left-to-right shunt in the patient is output. When the horizontal position relationship indicates that there is no right shift, a classification result that there is no intracardiac left-to-right shunt in the patient is output.

The use of the above method for classification of intracardiac shunts is feasible. Similarly, it is feasible to determine whether there is an intracardiac left-to-right shunt by determining whether there is a right shift of a center of saline concentration based on a left-side heart phase impedance dilution curve. Similarly, it is feasible to determine whether there is an intracardiac right-to-left shunt by determining whether there is a left shift of a center of saline concentration in a right-sided heart phase during saline-contrast EIT. The above method provides accurate information for the prediction analysis of an intracardiac shunt in a patient, and can well reflect a specific situation and effect of an intracardiac shunt. The above method is a bedside, noninvasive, and radiation-free practical method, and is conducive to the use of saline-contrast EIT data in the auxiliary diagnosis of cardiac diseases and the auxiliary analysis of occurrence and development of related diseases.

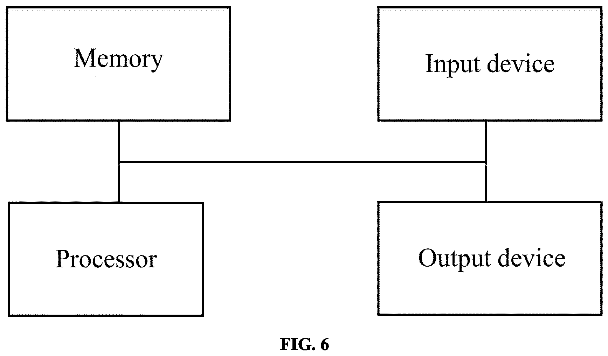

FIG. 6 is a schematic diagram of an apparatus provided in an embodiment of the present application. The apparatus includes:
a memory and a processor.

The apparatus can further include an input device and an output device.

The memory, the processor, the input device, and the output device can be connected through a bus or in another means. As shown in FIG. 6, the connection is allowed through a bus, for example.

The memory is configured to store a programmed instruction. The processor is configured to invoke the programmed instruction. When executed, the programmed instruction implements the method for reconstructing a lung perfusion image based on saline contrast-EIT described above, or implements the method for reconstructing a pulsatile perfusion image described above, or implements the lung perfusion and regional V/Q noninvasive imaging method described above, or implements the method for image analysis of right-sided heart failure described above, or implements the method for image analysis of an intracardiac shunt described above.

A system for reconstructing a lung perfusion image based on saline contrast-EIT is provided in an embodiment of the present application, including:
an acquisition module 101 configured to acquire a saline-contrast electrical impedance dilution curve of a patient; and
a generation module 102 configured to input the saline-contrast electrical impedance dilution curve of the patient into a pretrained deep learning model to generate an SPECT image reconstructed based on saline contrast for the patient.

A system for reconstructing a pulsatile perfusion image is provided in an embodiment of the present application, including:
an acquisition module 201 configured to acquire a pulmonary cardiac related pulsatility image of a patient;
a first generation module 202 configured to acquire a synchronous saline-contrast electrical impedance dilution curve of the patient and generate a saline contrast EIT-based lung perfusion image of the patient;
a calculation module 203 configured to calculate a ratio of blood flow impedance data in the saline contrast EIT-based lung perfusion image to pulsatile impedance data in the pulsation image or a ratio of pixels in the saline contrast EIT-based lung perfusion image to pixels in the pulsation image to generate a correction factor; and
a second generation module 204 configured to generate a pulsatile perfusion image corrected by saline contrast based on the correction factor and the pulsation image.

A lung perfusion and regional V/Q noninvasive imaging system is provided in an embodiment of the present application, including:
a first acquisition module 301 configured to acquire a pulmonary cardiac related pulsatility image of a patient;
a generation module 302 configured to generate a pulsatile perfusion image corrected by saline contrast based on the method for reconstructing a pulsatile perfusion image described above;
a second acquisition module 303 configured to acquire a lung ventilation image of the patient; and
an imaging module 304 configured to construct a lung ventilation/blood flow image with the lung ventilation image and the pulsatile perfusion image corrected by the saline contrast-EIT of the patient.

A system for image analysis of right-sided heart failure is provided in an embodiment of the present application, including:
an acquisition module 401 configured to acquire EIT impedance signals of a patient, where the EIT impedance signals include an impedance signal at a ventilation stage and an impedance signal at a saline contrast-EIT stage;
a first generation module 402 configured to conduct low-pass filtering for the impedance signal at the ventilation stage to generate a lung ROI image;
a second generation module 403 configured to conduct band-pass filtering for the impedance signal at the ventilation stage to generate a heart ROI image;
a calculation module 404 configured to calculate a difference between a starting time of a saline to enter a heart ROI and a time of the saline to enter a lung ROI based on a decrease in an impedance at the saline contrast-EIT stage; and
an output module 405 configured to output a classification result of whether there is the right-sided heart failure in the patient based on the difference.

A system for image analysis of an intracardiac shunt is provided in an embodiment of the present application, including:
an acquisition module 501 configured to acquire a saline-contrast impedance curve of a patient;
an image reconstruction module 502 configured to generate an image sequence diagram based on the saline-contrast impedance curve of the patient, where the image sequence diagram includes a right-sided heart phase image sequence diagram and/or a left-sided heart phase image sequence diagram;
a calculation module 503 configured to extract a center of heart of each image sequence diagram and calculate a horizontal position relationship between the center of heart and a center of heart of a first image sequence diagram; and
an output module 504 configured to output a classification result of whether there is the intracardiac shunt in the patient based on the horizontal position relationship.

A person skilled in the art can clearly understand that, for convenience and brevity of description, reference can be made to corresponding processes in the above method embodiments for specific working processes of the above-described system, apparatus, and module, which are not detailed here.

In several embodiments provided in the present application, it should be understood that the disclosed system, apparatus, and method may be implemented in other manners. For example, the described apparatus embodiment is merely schematic. For example, the module division is merely a logical function division, and there may be may be other division manners in actual implementation. For example, a plurality of modules or components may be combined or integrated into another system, or some features may be ignored or may not be implemented. In addition, the intercoupling or direct coupling or communication connection shown or discussed may be indirect coupling or communication connection through some interfaces, devices, or modules, or may be implemented in an electric manner, a mechanical manner, or other forms.

The modules described as separate components may or may not be physically separate, and components displayed as modules may or may not be physical modules, may be located in one position, or may be distributed on a plurality of network modules. Some or all of the modules may be selected based on actual needs to allow the objectives of the solutions of the embodiments.

In addition, functional modules in the embodiments of the present application may be integrated into one processing module, or each of the modules may exist alone physically, or two or more modules are integrated into one module. The above integrated module may be implemented in a form of hardware, or may be implemented in a form of a functional module of software.

Those of ordinary skill in the art can understand that all or some of the steps in the method of the above embodiment may be implemented by instructing related hardware through a program. The program may be stored in a computer-readable storage medium. The computer-readable storage medium may include a read-only memory (ROM), a random access memory (RAM), a magnetic disk, an optical disk, etc.

Those of ordinary skill in the art can understand that all or some of the steps in the method of the above embodiment may be implemented by instructing related hardware through a program. The program may be stored in a computer-readable storage medium. The computer-readable storage medium may be ROM, a magnetic disk, an optical disk, etc.

The computer equipment provided by the present application is described in detail above. Those of ordinary skill in the art can make changes to the specific implementations and application scope according to the ideas of the embodiments of the present application. In conclusion, the contents of the description should not be construed as limiting the present application.

## Claims

1. A computer-implemented method for reconstructing a lung perfusion image based on saline contrast, comprising:
acquiring (S101) a saline-contrast electrical impedance dilution curve of a patient;
extracting at least one feature of the saline-contrast electrical impedance dilution curve of the patient, wherein, the at least one feature comprises one or more of the following features: a maximum impedance decline value, an area under the curve, a maximum slope and an average transmission time;
generating a saline-contrast electrical impedance tomography, EIT, -based perfusion image from the saline-contrast electrical impedance dilution curve of the patient with an image reconstruction algorithm;
and inputting (S102) both the at least one feature of the saline-contrast electrical impedance dilution curve of the patient and the saline-contrast EIT-based perfusion image into a pretrained deep learning model to generate a single-photon emission computed tomography, SPECT, image reconstructed based on the saline contrast for the patient,
wherein the pretrained deep learning model is constructed according to the following process:
acquiring a saline-contrast electrical impedance dilution curve and a synchronous SPECT image; extracting the at least one feature of the saline-contrast electrical impedance dilution curve of the patient;
generating the saline-contrast EIT-based perfusion image from the saline-contrast electrical impedance dilution curve of the patient with the image reconstruction algorithm;
inputting both the at least one feature of the saline-contrast electrical impedance dilution curve of the patient and the saline-contrast EIT-based perfusion image into the deep learning model to generate an SPECT image reconstructed based on saline contrast from the saline-contrast electrical impedance dilution curve; and
calculating a loss according to the SPECT image reconstructed based on the saline contrast and the synchronous SPECT image, conducting backpropagation, and updating parameters to obtain the pretrained deep learning model.

2. The computer-implemented method for reconstructing the lung perfusion image based on the saline contrast according to claim 1, wherein the deep learning model is DeepLab or unet, and optionally, the deep learning model is DeepLab V3.

## Patentansprüche

1. Computerumgesetztes Verfahren zum Rekonstruieren eines Lungenperfusionsbildes basierend auf einem Kochsalzkontrast, umfassend:
Erfassen (S101) einer elektrischen Impedanzverdünnungskurve eines Kochsalzkontrastes eines Patienten;
Extrahieren mindestens eines Merkmals der elektrischen Impedanzverdünnungskurve des Kochsalzkontrastes des Patienten,
wobei das mindestens eine Merkmal eines oder mehrere der folgenden Merkmale umfasst: einen maximalen Impedanzrückgangswert, eine Fläche unter der Kurve, eine maximale Steigung und eine durchschnittliche Übertragungszeit;
Erzeugen eines Perfusionsbildes basierend auf einer elektrischen Impedanztomographie, EIT, des Kochsalzkontrastes aus der elektrischen Impedanzverdünnungskurve des Kochsalzkontrastes des Patienten mit einem Bildrekonstruktionsalgorithmus; und
Eingeben (S102) sowohl des mindestens einen Merkmals der elektrischen Impedanzverdünnungskurve des Kochsalzkontrastes des Patienten als auch des EIT-basierten Perfusionsbildes des Kochsalzkontrastes in ein vortrainiertes tiefes Lernmodell, um ein Single-Photon-Emission-Computed-Tomography-, SPECT, Bild zu erzeugen, das basierend auf dem Kochsalzkontrast für den Patienten rekonstruiert wird,
wobei das vortrainierte tiefe Lernmodell gemäß dem folgenden Vorgang konstruiert wird:
Erfassen einer elektrischen Impedanzverdünnungskurve des Kochsalzkontrastes und eines synchronen SPECT-Bildes;
Extrahieren des mindestens einen Merkmals aus der elektrischen Impedanzverdünnungskurve des Kochsalzkontrastes des Patienten;
Erzeugen des EIT-basierten Perfusionsbildes des Kochsalzkontrastes aus der elektrischen Impedanzverdünnungskurve des Kochsalzkontrastes des Patienten mit dem Bildrekonstruktionsalgorithmus;
Eingeben sowohl des mindestens einen Merkmals der elektrischen Impedanzverdünnungskurve des Kochsalzkontrastes des Patienten und des EIT-basierten Perfusionsbildes des Kochsalzkontrastes in das tiefe Lernmodell, um ein SPECT-Bild zu erzeugen, das basierend auf einem Kochsalzkontrast aus der elektrischen Impedanzverdünnungskurve des Kochsalzkontrastes des Patienten rekonstruiert wird; und
Berechnen eines Verlustes gemäß dem SPECT-Bild, das basierend auf dem Kochsalzkontrast und dem synchronen SPECT-Bild rekonstruiert wird, Vornehmen einer Rückführung und Aktualisieren der Parameter, um das vortrainierte tiefe Lernmodell zu erzielen.

2. Computerumgesetztes Verfahren zum Rekonstruieren eines Lungenperfusionsbildes basierend auf Kochsalzkontrast nach Anspruch 1, wobei das tiefe Lernmodell DeepLab oder U-Net ist und das tiefe Lernmodell wahlweise DeepLab V3 ist.

## Revendications

1. Procédé mis en œuvre par ordinateur pour reconstruire une image de perfusion pulmonaire sur la base d'un contraste salin, comprenant les étapes consistant à :
acquérir (S101) une courbe de dilution d'impédance électrique d'un contraste salin d'un patient ;
extraire au moins une particularité de la courbe de dilution d'impédance électrique d'un contraste salin du patient,
dans lequel, ladite au moins une particularité comprend une ou plusieurs des particularités suivantes : une valeur de déclin d'impédance maximale, une aire sous la courbe, une pente maximale et un temps de transmission moyen ;
générer une image de perfusion sur la base d'une tomographie d'impédance électrique, EIT, d'un contraste salin à partir de la courbe de dilution d'impédance électrique d'un contraste salin du patient avec un algorithme de reconstruction d'image ; et
entrer (S102) à la fois ladite au moins une particularité de la courbe de dilution d'impédance électrique d'un contraste salin du patient et l'image de perfusion à base d'EIT d'un contraste salin dans un modèle d'apprentissage profond pré-entraîné pour générer une image de Single-Photon-Emission Computed Tomography, SPECT, reconstruite sur la base du contraste salin pour le patient,
dans lequel le modèle d'apprentissage profond pré-entraîné est construit selon le processus suivant :
acquérir une courbe de dilution d'impédance électrique d'un contraste salin et une image SPECT synchrone ;
extraire ladite au moins une particularité de la courbe de dilution d'impédance électrique d'un contraste salin du patient ;
générer l'image de perfusion à base d'EIT d'un contraste salin à partir de la courbe de dilution d'impédance électrique d'un contraste salin du patient avec l'algorithme de reconstruction d'image ;
entrer à la fois ladite au moins une particularité de la courbe de dilution d'impédance électrique d'un contraste salin du patient et l'image de perfusion à base d'EIT d'un contraste salin dans le modèle d'apprentissage profond pour générer une image SPECT reconstruite sur la base d'un contraste salin à partir de la courbe de dilution d'impédance électrique d'un contraste salin ; et
calculer une perte selon l'image SPECT reconstruite sur la base du contraste salin et de l'image SPECT synchrone, procéder à une rétropropagation et mettre à jour des paramètres pour obtenir le modèle d'apprentissage profond pré-entraîné.

2. Procédé mis en œuvre par ordinateur pour reconstruire l'image de perfusion pulmonaire sur la base du contraste salin selon la revendication 1, dans lequel le modèle d'apprentissage profond est DeepLab ou U-Net, et en option le modèle d'apprentissage profond est DeepLab V3.
